# EUROPÄISCHE PATENTSCHRIFT

(11) **EP 2 872 792 B1**
(45) Veröffentlichungstag und Bekanntmachung des Hinweises auf die Patenterteilung: **02.05.2018**
(21) Anmeldenummer: 13736560.7
(22) Anmeldetag: 11.07.2013
(51) Int. Cl.: F16D 66/02

(54) **VERSCHLEISSWEG-AUFNEHMER EINES BREMSBELAGS EINER REIBBREMSE UND VERFAHREN ZUM ERMITTELN EINES VERSCHLEISSWEGS**
WEAR TRAVEL SENSOR FOR A BRAKE LINING OF A FRICTION BRAKE, AND METHOD FOR DETERMINING WEAR TRAVEL
CAPTEUR DE VOIE D'USURE D'UNE GARNITURE DE FREIN D'UN FREIN À FRICTION ET PROCÉDÉ DE DÉTERMINER DE VOIE D'USURE

(30) Priorität: 13.07.2012 DE 102012013955
(43) Veröffentlichungstag der Anmeldung: 20.05.2015
(73) Patentinhaber: KNORR-BREMSE Systeme für Nutzfahrzeuge GmbH, 80809 München (DE)
(72) Erfinder: EICHLER, Thomas, 80809 München (DE)
(86) Internationale Anmeldenummer: PCT/EP2013/064657
(87) Internationale Veröffentlichungsnummer: WO 2014/009455

(56) Entgegenhaltungen:
- DE-A1-102011 113 526
- US-A- 4 884 434
- US-A1- 2007 163 325
- US-A1- 2011 037 983

## Beschreibung

Die Erfindung betrifft einen Verschleißweg-Aufnehmer eines Bremsbelags einerReibbremse, wie z.B. aus US-A-2011/0037983 hervorgeht. Die Erfindung bezieht sich auch auf ein Verfahren zum Ermitteln eines Verschleißwegs eines Bremsbelags.
Fahrzeuge und bestimmte technische Geräte, zum Beispiel Hebezeuge, verwenden häufig Reibungsbremsen, um kinetische Energie umzuwandeln. Bevorzugt wird dabei speziell in Personenkraftwagen und bei Nutzfahrzeugen die Scheibenbremse. Diese besteht in einer typischen Bauform aus einem Bremssattel, zwei Bremsbelägen und der Bremsscheibe. Mittels des Bremssattels werden Zuspannkräfte aufgebracht und Bremskräfte aufgenommen. Die Zuspannkräfte wirken über beide Bremsbeläge auf die Bremsscheibe, welche in Abhängigkeit von der Höhe der Zuspannkraft eine Verzögerung der Rotationsbewegung erfährt. Diese Verzögerung wird maßgeblich vom Reibwert zwischen Bremsscheibe und Bremsbelag mitbestimmt. Da die Beläge konstruktiv als Verschleißteile ausgelegt werden und die Reibwerte abhängig von der Festigkeit sind, sind die Beläge generell weicher als die Bremsscheibe, das heißt, die Beläge erfahren über ihre Gebrauchsdauer eine Änderung der Belagstärke, sie verschleißen.
Aus dieser durch den Verschleiß bedingten Belagstärkenänderung ergibt sich die Notwendigkeit, dass vom Fahrzeugnutzer erkannt wird, wann die Beläge eine so genannte Restbelagstärke bzw. Verschleißgrenze erreicht haben und ein Austausch der Bremsbeläge notwendig ist. Um eine optimale Nutzung der Bremsbeläge zu gewährleisten, ist es wünschenswert, dass jederzeit der momentane Istzustand der einzelnen Bremsbeläge, das heißt ihre Belagstärke erfasst werden kann.
Es sind Vorschläge dazu gemacht worden, von denen einer vorsieht, eine auf dem Bremsbelag aufgebrachte Markierung regelmäßig zu kontrollieren und somit ein Entscheidungskriterium zum Belagwechsel zu geben. Diese Kontrolle erfordert aber eine bestimmte Regelmäßigkeit sowie bestimmte Säuberungsarbeiten, um die Markierung eindeutig zu erkennen.
Ein anderer Vorschlag liefert eine kontinuierliche Verschleißanzeige, bei welcher der Verschleiß der Bremsbeläge einer Radbremse indirekt über eine elektronische Drehwinkelmessung an einem in der Radbremse integrierten Verschleißnachsteller gemessen wird. Nachteilig hierbei ist, dass der Verschleiß der Bremsscheibe mit einfließt und es somit zu einer Summenverschleißerfassung des Systems Bremsbeläge/Bremsscheibe kommt.
DE 10 2007 008 729 B4 beschreibt ein Abtastelement zur Erfassung eines Verschleißwegs eines Bremsbelags, insbesondere einer Reibbremse. Es umfasst ein Gehäuse mit einer Abtastseite und einer Anschlussseite; und mindestens einen elektrischen Leiter in Kombination mit mindestens einem elektrischen Widerstandselement. Dabei sind zwei Abmessungen des Widerstandselementes und des elektrischen Leiters in Abhängigkeit vom Verschleißweg nicht konstant.
Es ist daher die Aufgabe der vorliegenden Erfindung, einen verbesserten Verschleißweg-Aufnehmer eines Bremsbelags zu schaffen.
Eine weitere Aufgabe besteht darin, ein Verfahren zum Ermitteln eines Verschleißwegs eines Bremsbelags mit einem solchen Verschleißweg-Aufnehmer bereitzustellen.
Die Aufgabe wird durch einen Verschleißweg-Aufnehmer mit den Merkmalen des Anspruchs 1 gelöst.

Die weitere Aufgabe wird durch ein Verfahren mit den Merkmalen des Anspruchs 7 gelöst.
Ein Gedanke der Erfindung besteht darin, einen Verschleißweg-Aufnehmer mit einem Verschleißvolumenelement zu schaffen, welches lichtleitfähig ausgebildet ist.

Dadurch wird erreicht, dass eine Lichtleitfähigkeit in Abhängigkeit vom Verschleißweg verändert wird, wobei dadurch Phasenverschiebung von Lichtsignalen verändert wird und somit ein Maß für den Verschleißweg bestimmbar ist.
Ein erfindungsgemäßer Verschleißweg-Aufnehmer zur Erfassung eines Verschleißwegs eines Bremsbelags, insbesondere einer Reibbremse, mit einer Schutzumhüllung mit einer Reibseite und einer Anschlussseite; und einem Fühler mit mindestens einem Verschleißvolumenelement wird bereitgestellt. Das Verschleißvolumenelement ist lichtleitfähig ausgebildet, wobei ein Lichtleitweg des Volumens des Verschleißvolumenelementes abhängig von dem Verschleißweg des Bremsbelags ist.

Der Verschleißweg-Aufnehmer weist einen Fühler in einer Schutzumhüllung oder einem Gehäuse auf, welche/s in einem Bremsbelag so angeordnet ist, dass sie/es dem gleichen Verschleiß wie der Bremsbelag selbst unterworfen ist. Damit wird der Verschleißweg-Aufnehmer mit dem Fühler ebenfalls in gleichem Maß durch den Verschleiß verkürzt. Dieses ergibt einen auf optischem Wege in dem Fühler zu erfassenden Messeffekt, welcher als Phasenverschiebung zwischen einem Erregersignal und einem Antwortsignal vorliegt. Das heißt, eine Messung und somit Anzeige der Belagstärke eines jeden Bremsbelags ist unabhängig vom Verschleiß der zugehörigen Bremsscheibe möglich.

Ein erfindungsgemäßes Verfahren zum Ermitteln eines Verschleißwegs eines Bremsbelags, insbesondere einer Reibbremse, mit einem solchen Verschleißweg-Aufnehmer wird geschaffen. Dem Verschleißvolumenelement des Verschleißweg-Aufnehmers wird ein periodisches Erregersignal eingespeist. Dieses Erregersignal wird dann nach Durchlauf durch das Verschleißvolumenelement als Antwortsignal empfangen und eine Phasenverschiebung zwischen dem eingespeisten Erregersignal und dem empfangenen Antwortsignal wird als Verschleißweg des Bremsbelags ermittelt.

Weitere Vorteile der Erfindung sind:
- direkte Messung des Verschleißzustandes eines Bremsbelags, wobei die tatsächliche Belagstärke erfasst wird;
- permanente Messung des Verschleißzustandes, es wird zu definierten Zeitpunkten die tatsächliche Belagstärke ausgelesen;
- es ist keine elektrische Energie an der Messstelle notwendig, so können auch keine Überbrückungen möglich sein, die ein elektrisches Messsignal stören, verändern oder durch Kurzschluss unbrauchbar machen könnten;
- der Belagverschleiß kann für jeden Belag separat erfasst und ausgegeben werden;
- Optimierung der Nutzung des Belagverschleißvolumens, da der Scheibenverschleiß bei dieser Messung nicht mit einfließt;
- Abmessungen des Verschleißweg-Aufnehmers sind frei variierbar;
- Relativtemperaturerfassung während des Fahrzeugbetriebs.

Vorteilhafte Weiterbildungen der Erfindung sind den Unteransprüchen zu entnehmen.

In einer Ausführung erstreckt sich das Verschleißvolumenelement als ein dreidimensionaler Körper in Richtung des Verschleißwegs in einer Verschleißlänge, rechtwinklig dazu in einer Verschleißdicke und einer Verschleißbreite. Durch entsprechende Dimensionierung der Verschleißhöhe und Verschleißbreite über der Verschleißlänge in kontinuierliche Weise oder/und Stufenform kann eine vielfältige Anpassung an unterschiedliche Einsatzfälle ermöglicht werden. Die Erfindung sieht vor, dass das Verschleißvolumenelement einen ersten Verbindungsabschnitt zur Einspeisung eines optischen Erregersignals und einen zweiten Verbindungsabschnitt zur Auskopplung eines optischen Antwortsignals als optische Verbindungen aufweist. Damit kann eine Verbindung nicht nur mit Lichtleiterelementen, sondern auch z.B. mit Leuchtdioden, Fototransistoren u.dgl. erfolgen, d.h. eine Verbindung mit unterschiedlichen Übertragungsmitteln zu Auswerteeinheiten.
In einer Ausführung ist das Verschleißvolumenelement mittels der Verbindungsabschnitte über optische Leiterelemente mit einer Auswerteeinheit koppelbar.
In einer noch weiteren Ausführung ist das Verschleißvolumenelement aus Fiberglas oder einem lichtleitfähigen Werkstoff mit ähnlichen Eigenschaften wie Fiberglas ausgebildet. Somit sind kostengünstige Werkstoffe mit hoher Qualität einsetzbar, die spanabhebend oder auch spanlos geformt werden können, z.B. mittels Spritzdruckguss.
In einer anderen Ausführung kann das Verschleißvolumenelement folienähnlich als Rechteckfläche oder Konturfläche ausgebildet sein. Damit ist eine einfache Herstellung möglich.
Eine alternative Ausführung sieht vor, dass das Verschleißvolumenelement zylinder-, quader-, prisma-, hohlzylinder-, kegel-, pyramidenförmig mit oder ohne Stumpf oder in einer beliebigen anderen sphärischen Form ausgebildet ist. So kann eine vielseitige Anpassung an unterschiedliche Einsatzfälle möglich sein.
In einer weiteren Ausführung des Verfahrens kann eine Amplitude und/oder Frequenz des Erregersignals und des Antwortsignals erfasst und verglichen werden. Dadurch ist eine höhere Genauigkeit erzielbar.
In einer weiteren Ausführung kann eine auf den Verschleißweg-Aufnehmer einwirkende Temperaturänderung als Phasenverschiebung zwischen dem Erregersignal und dem Antwortsignal erfasst und einer Relativtemperatur zugeordnet werden.

Die Temperaturänderung kann als Phasenverschiebung zwischen dem Erregersignal und dem Antwortsignal erfasst werden, wenn eine Geschwindigkeit der Änderung der Phasenverschiebung von Erregersignal und Antwortsignal durch die Temperaturänderung um ein Vielfaches größer ist als die Signaländerung durch den Belagverschleiß. Das ist häufig der Fall, wobei dieses eine einfache Bestimmung sein kann.

In einer noch weiteren Ausführung des Verfahrens kann das Ermitteln des Verschleißwegs in vorher festlegbaren Zeitpunkten bei einer konstanten Umgebungstemperatur erfolgen. Somit kann eine einfache aber präzise Ermittlung erfolgen. Außerdem wird dadurch Energie eingespart.

Für eine weitere höhere Genauigkeit und Festlegen von Messzeitpunkten können beim Ermitteln des Verschleißwegs Betriebszustände eines zugeordneten Fahrzeugs über weitere Sensoren erfasst und in eine Auswertung einbezogen werden.

Ein Bremsbelag weist den oben beschriebenen Verschleißweg-Aufnehmer auf. Es ist natürlich auch möglich, dass mehrere Verschleißweg-Aufnehmer in einem Bremsbelag eingesetzt werden können.

Die Erfindung wird nun anhand von Ausführungsbeispielen mit Bezug auf die beigefügten Figuren näher erläutert. Hierbei zeigen:
- Fig. 1: eine schematische perspektivische Darstellung eines Ausführungsbeispiels eines erfindungsgemäßen Verschleißweg-Aufnehmers;
- Fig. 2: eine schematische perspektivische Teildarstellung einer Scheibenbremse mit den erfindungsgemäßen Verschleißweg-Aufnehmern nach Fig. 1;
- Fig. 3a-b: ein Verschleißvolumenelement in verschiedenen Ansichten; und

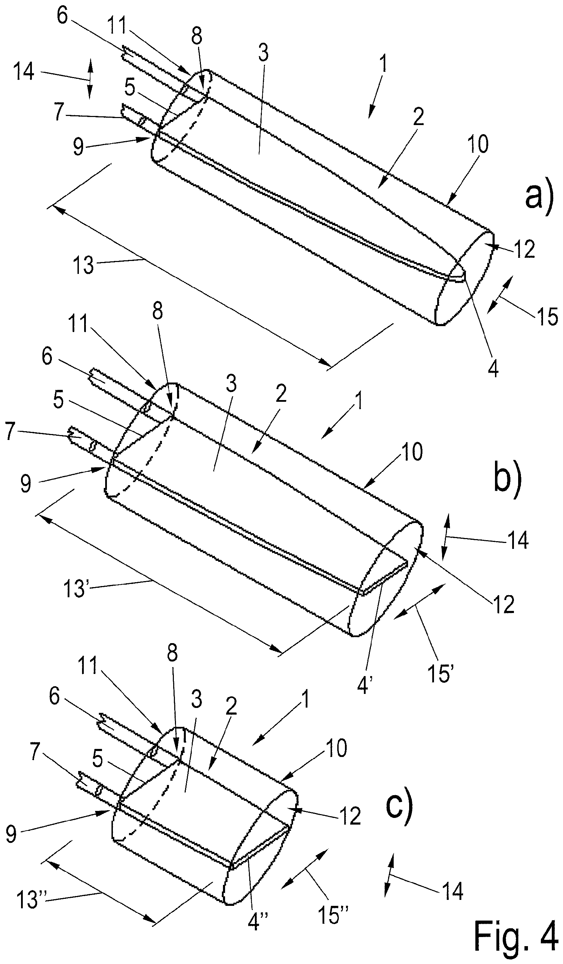

- Fig. 4a-c: schematische Darstellungen des Verschleißweg-Aufnehmers nach Fig. 1 bei verschiedenen Verschleißzuständen.

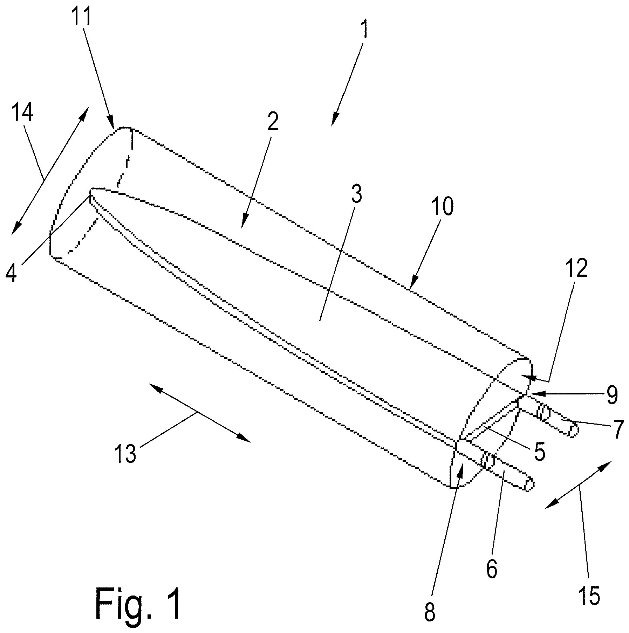

Fig. 1 zeigt eine schematische perspektivische Darstellung eines Ausführungsbeispiels eines erfindungsgemäßen Verschleißweg-Aufnehmers 1 in perspektivischer Ansicht in einer vereinfachten Darstellung.

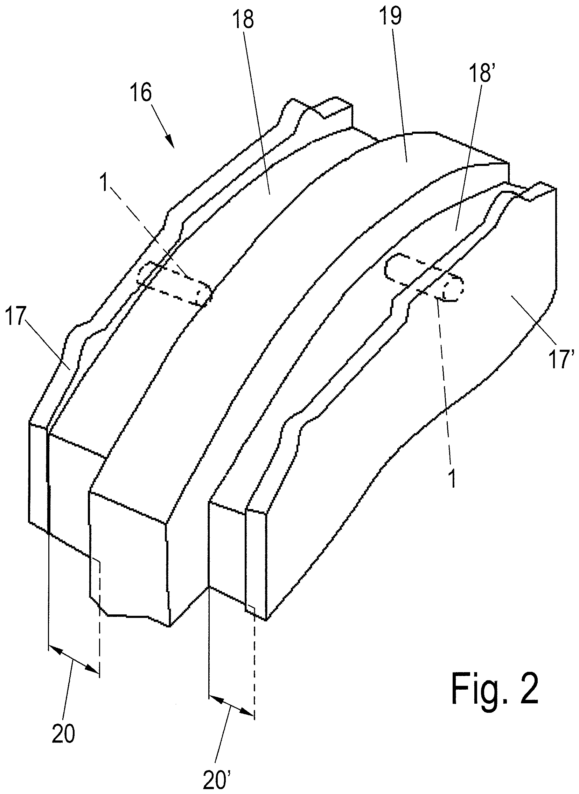

Der Verschleißweg-Aufnehmerl besitzt eine Schutzumhüllung 10, welche hier eine Kreiszylinderform aufweist und nur angedeutet ist. Innerhalb dieser Schutzumhüllung 10 ist ein Fühler 2 mit einem lichtleitfähigen Verschleißvolumenelement 3 angeordnet. Die Schutzumhüllung 10 hat die Aufgabe, den Fühler 2 bzw. das Verschleißvolumenelement 3 vor äußeren Einflüssen zu schützen und die Montage in einer Belagapplikation zu ermöglichen, die im Zusammenhang mit Fig. 2 erläutert wird. Als Material der Schutzumhüllung 10 kommt ein Werkstoff zum Einsatz, dessen Festigkeit etwa die gleiche Festigkeit aufweist wie ein Bremsbelag 18, 18' (siehe Fig. 2), z.B. einer Scheibenbremse 16 bzw. deutlich weicher ist als eine Bremsscheibe 19 der Scheibenbremse 16 (siehe Fig. 2). Außerdem ist die Schutzumhüllung 10 temperatur- und korrosionsbeständig, beständig gegenüber einem Werkstoff des Verschleißvolumenelementes 3 und umgekehrt, und ist leicht verarbeitbar. Ein solcher Werkstoff können z.B. Hartplastik, Hochtemperaturkleber und/oder temperaturbeständige Vergusssysteme sein.

Der Verschleißweg-Aufnehmer 1 weist eine Reibseite 11 auf, die bei Einbau in den Bremsbelag 18, 18' zu der Bremsscheibe 19 der Scheibenbremse 16 (siehe Fig. 2) weist. Das lichtleitfähige Verschleißvolumenelement 3 ist in der Schutzumhüllung 10 so angeordnet, dass eine Vorderkante 4 des Verschleißvolumenelementes 3 an der Reibseite 11 in deren Ebene liegt. Ein Rand 5 des Verschleißvolumenelementes 3 liegt gegenüber der Vorderkante 4 an einer Anschlussseite 12 des Aufnehmers 1. Aus der Anschlussseite 4 stehen ein erstes und ein zweites Leiterelement 6, 7 hervor. Diese Leiterelemente 6, 7 sind als optische Signalleiter ausgebildet und, beispielsweise über eine geeignete Anschlusseinrichtung (z.B. eine optische Steckverbindung) zum Anschluss an eine nicht gezeigte Auswertevorrichtung vorgesehen. Das erste Leiterelement 6 ist an einem ersten Verbindungsabschnitt 8 hier an einem linken Endabschnitt des Rands 5 des lichtleitfähigen Verschleißvolumenelementes 3 angebracht. Gegenüberliegend an einem rechten Endabschnitt dieses Rands 5 ist in gleicher Weise das zweite Leiterelement 7 in einem zweiten Verbindungsabschnitt 9 mit dem lichtleitfähigen Verschleißvolumenelement 3 verbunden. Beide Leiterelemente 6 und 7 erstrecken sich parallel zueinander in Längsrichtung der Schutzumhüllung 10 hervorstehend von der Anschlussseite 12.

Der Fühler 2 des Verschleißweg-Aufnehmers 1 weist das lichtleitfähige Verschleißvolumenelement 3 auf. Das Verschleißvolumenelement 3 besitzt eine Form, die einer Parabel ähnelt, deren Basisseite als der Rand 5 zur Anschlussseite 12 weist und deren Scheitel an der Reibseite 11 als Vorderkante 4 angeordnet ist.

Das Verschleißvolumenelement 3 ist dreidimensional ausgebildet und weist als veränderliche Größen eine Verschleißlänge 13, eine Verschleißdicke 14 und eine Verschleißbreite 15 auf. Verschleißlänge 13, Verschleißdicke 14 und Verschleißbreite 15 sind hier orthogonal zueinander. Das Verschleißvolumen des Verschleißvolumenelementes 3 ist somit von diesen drei verschleißzustandsabhängigen Variablen abhängig.

Das Wirkprinzip des Fühlers 2 des Aufnehmers 1 beruht auf dem Funktionsprinzip aus der Fiberglasoptik (auch als Glasfaseroptik oder Fieberglasoptik bezeichnet), bei welchem an einem Signaleingang ein periodisches Erregersignal, z.B. Lichtimpulse, eingeleitet und einem Antwortsignal an einem Signalausgang gegenübergestellt wird. Dabei wird eine Phasenverschiebung der beiden Signale zueinander bestimmt. Alternativ ist auch eine Erfassung der Amplitude bzw. Frequenz, auch zusätzlich, denkbar. Diese Phasenverschiebung ist abhängig von verschiedenen physikalischen Einflussgrößen, wie z.B. Temperatur, Dehnung.

In diesem Ausführungsbeispiel wird die Phasenverschiebung zwischen Erregersignal und Antwortsignal primär durch das Verschleißvolumen des Verschleißvolumenelementes 3 verursacht. Dies basiert auf der Theorie, dass bei einem großen Volumen des Verschleißvolumenelementes 3 (was bei einem noch nicht gebrauchten Verschleißweg-Aufnehmer1 der Fall ist) eine Durchlaufzeit des Erregersignals durch das Verschleißvolumenelement 3 deutlich verschieden ist als bei einem kleineren Volumen des Verschleißvolumenelementes 3, welches z.B. in der Verschleißlänge 13 durch Verschleiß reduziert ist. D.h., dass eine Veränderung des Volumens des Verschleißvolumenelementes 3 in Abhängigkeit vom Verschleißweg des Verschleißweg-Aufnehmers 1 eine Änderung eines Lichtleitwegs innerhalb des lichtleitfähigen Verschleißvolumenelementes 3 bewirkt. Eine solche Änderung des Lichtleitwegs ergibt eine Phasenverschiebung zwischen dem Erregersignal und dem Antwortsignal, welche dann einem entsprechenden Verschleißmaß der Bremsbeläge 18, 18' (siehe Fig. 2) zugeordnet wird.

Sekundär bewirkt eine Temperatureinwirkung eine Relativwertänderung zu einem jeweils bestehenden Verschleißvolumen des Verschleißvolumenelementes 3. Dazu muss für definierte Beschlagverschleißmaße eine entsprechende Temperaturkennlinie in einer Auswerteeinheit hinterlegt werden, z.B. als Tabelle in einer Speichereinrichtung.

Das Verschleißvolumenelement 3 ist aus einem lichtleitfähigen Material erstellt, welches die Lichtimpulse des Erregersignals leiten kann. So kann dieses Material z.B.

Fiberglas oder ein Werkstoff mit ähnlichen Eigenschaften sein, welche die Erfassung der Verschleißvolumenänderung des Verschleißvolumenelementes 3 sowie der Temperatur ermöglichen.

Eine Erzeugung des Erregersignals und dessen Einleitung in einen optischen Leiter sowie die Erfassung, Auswertung und Umwandlung des Antwortsignals aus einem optischen Leiter in ein analoges oder digitales elektrisches Signal erfolgt über/durch eine an der entsprechenden Schnittstelle angebrachte Signalverarbeitungseinheit.

So wird hier z.B. das erste Leiterelement 6 als optischer Leiter dazu verwendet, das Erregersignal von der Schnittstelle durch den ersten Verbindungsabschnitt 8 am Rand 5 in das Verschleißvolumenelement 3 einzuspeisen. Das Antwortsignal wird hier von dem zweiten Leiterelement 7 ebenfalls als optischer Leiter durch den zweiten Verbindungsabschnitt 9 auf der gegenüberliegenden Ecke am Rand 5 aufgenommen und in die Schnittstelle geleitet. Die Leiterelement 6 und 7 münden mit ihren nicht dargestellten freien Enden in der ebenfalls nicht gezeigten Schnittstelle der Signalverarbeitungseinheit.

Die Verbindungsabschnitte 8 und 9 sind als optische Verbindungen so gestaltet, dass sie den mechanischen Anschluss der optischen Leiterelemente 6, 7, z.B. als optische Steckverbindungen, gewährleisten. Dabei ermöglicht der erste Verbindungsabschnitt 8 den Durchtritt der Lichtimpulse des Erregersignals aus dem ersten Leiterelement 6 in den Werkstoff des Verschleißvolumenelementes 3. Und der zweite Verbindungsabschnitt 9 ermöglicht den Austritt des Antwortsignals aus dem Werkstoff des Verschleißvolumenelementes 3 in das zweite Leiterelement 7.

Der Verschleißweg-Aufnehmer 1 kann zum Beispiel bei einer Scheibenbremse 16 zum Einsatz kommen, wie in Fig. 2 in einer schematischen, perspektivischen Teildarstellung gezeigt ist.

Auf beiden Seiten einer nur zum Teil gezeigten Bremsscheibe 19 ist jeweils ein Bremsbelag 18, 18' auf einem zugehörigen Belagträger 17, 17' angeordnet, wobei jeder Bremsbelag 18, 18' eine jeweilige Bremsbelagstärke 20, 20' aufweist. Innerhalb eines jeden Bremsbelags 18, 18' ist hier ein Verschleißweg-Aufnehmer 1 eingebracht. In anderen Ausführungen können natürlich auch mehrere verwendet werden. Die Flächen der Bremsbeläge 18, 18', welche an der Bremsscheibe 19 anliegen, fluchten im neuen, unverschlissenen Zustand mit den Reibseiten 11 der Verschleißweg-Aufnehmer 1. Dabei weisen die Anschlussseiten 12 (siehe Fig. 1) der Verschleißweg-Aufnehmer 1 von der Bremsscheibe 19 weg.

An den Bremsbelägen 18, 18' entsteht funktionsbedingt ein Verschleiß, der unabhängig vom Verschleiß der Bremsscheibe 19 für beide Bremsbeläge 18, 18' erfasst wird und in direkter Messung ermittelbar ist. Bei dieser Scheibenbremse 16, z.B. eine pneumatisch zugespannte Scheibenbremse für Nutzfahrzeuge, kommen zwei Bremsbeläge 18, 18' zum Einsatz, die im Neuzustand eine Belagstärke 20, 20' von z.B. 21 mm aufweisen. Die zulässige Restbelagstärke beträgt 2 mm. Bei unberücksichtigtem Verschleiß der Bremsscheibe 19 ergibt sich eine zu erfassende Gesamtverschleißlänge von 38 mm.

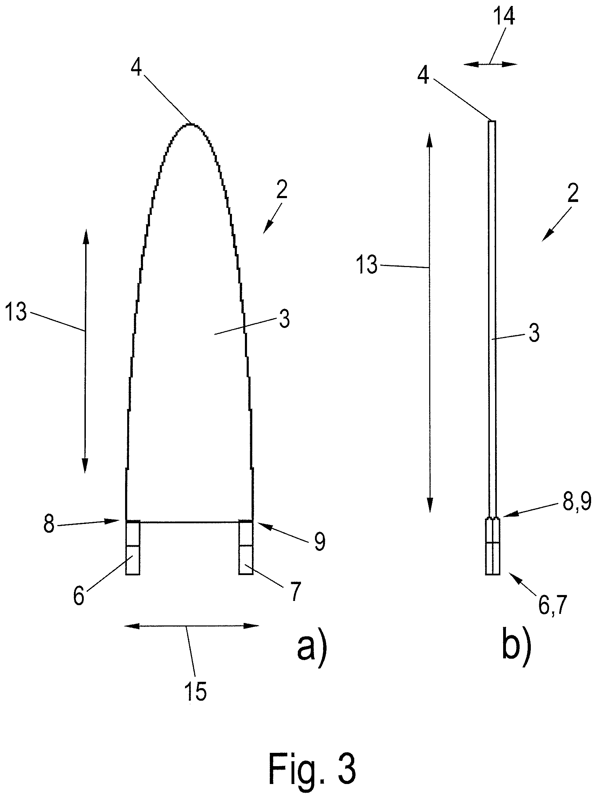

Fig. 3a und 3b zeigen ein Verschleißvolumenelement in verschiedenen Ansichten. Dabei ist in Fig. 3a eine Draufsicht dargestellt, wobei Fig. 3b eine Seitenansicht zeigt.

Das Verschleißvolumenelement 3 ist so ausgebildet, dass drei Größen, welche vom Verschleißzustand, z.B. des zugehörigen Bremsbelags 18, 18', abhängig sind, die Phasenverschiebung des Erregersignals zu dem Antwortsignal prägen. Eine dieser drei Größen ist die Verschleißlänge 13 (auch Sensorlänge genannt), welche dem Verschleißmaß des zugehörigen Bremsbelags 18, 18' entspricht. Eine weitere Größe ist die Verschleißdicke 14, die in diesem Beispiel über die Verschleißlänge 13 konstant ist. Die Verschleißdicke 14 kann aber auch über die Verschleißlänge 13 kontinuierlich oder/und stufenförmig verändert ausgebildet sein. Und die dritte Größe ist schließlich die Verschleißbreite 15, welche in Abhängigkeit vom zur Verfügung stehenden Bauraum festgelegt ist und sich über die Verschleißlänge 13 ebenfalls ändert. Durch eine Dimensionierung der Verschleißdicke 14 und/oder der Verschleißbreite 15 ist eine Beeinflussung der Sensorkennlinie, d.h. der Kennlinie des Verschleißvolumenelementes 3 möglich.

Die Gestaltung ist dabei beliebig an die Anforderungen anpassbar. So kann das Verschleißvolumenelement 3 z.B. folienähnlich als Rechteckfläche oder Konturfläche ausgebildet sein. Es kann aber auch beispielsweise zylinder-, quader-, prisma-, hohlzylinder-, kegel-, pyramidenförmig mit oder ohne Stumpf oder in einer beliebigen anderen sphärischen Form ausgebildet sein.

Fig. 3a bis 3c zeigen schematische Darstellungen des Verschleißweg-Aufnehmers 1 nach Fig. 1 bei verschiedenen Verschleißzuständen des zugehörigen Bremsbelags 18, 18' (Fig. 2).

Einen neuen und unverschlissenen Verschleißweg-Aufnehmer 1 zeigt Fig. 3a. Die Verschleißlänge 13 ist unverkürzt. Es ist noch kein Abtrag von der Reibseite 12 her vorhanden. Eine gemessene Phasenverschiebung zwischen Erregersignal und Antwortsignal entspricht einem Neuzustand.

Fig. 3b illustriert einen teilverschlissenen Zustand. Der Verschleißzustand beträgt ungefähr 25...30 %. Der Verschleißweg-Aufnehmer 1 ist um ca. 25...30 % auf eine Verschleißlänge 13' von der Reibseite 12 her abgetragen. Das Volumen des Verschleißvolumenelementes 3 ist gegenüber dem Neuzustand nach Fig. 3a kleiner geworden und die gemessene Phasenverschiebung ist unterschiedlich zu derjenigen im unverschlissenen Zustand. Diesem gemessenen Wert der Phasenverschiebung wird in der Auswerteeinheit der entsprechende Verschleißwert anhand einer Tabelle zugeordnet.

Fig. 3c zeigt einen Verschleißzustand mit Restbelag. Der Verschleißweg-Aufnehmer 1 ist nahezu zu 100 % auf eine restliche Verschleißlänge 13" abgetragen, wobei die gemessene Phasenverschiebung zwischen dem Erregersignal und dem Antwortsignal deutlich verschieden zum unverschlissenen Zustand ist.

Wirkt während des Betriebes eine Temperaturänderung auf den Verschleißweg-Aufnehmer 1 ein, wird diese ebenfalls als Phasenverschiebung durch die Auswerteeinheit erfasst und mittels in der Auswerteeinheit hinterlegter (gespeicherter) Kennlinien einer Relativtemperatur zugeordnet.

Die Temperaturerfassung ist nur dann möglich, wenn die Geschwindigkeit der Signaländerung, d.h. einer Änderung der Phasenverschiebung von Erregersignal und Antwortsignal, durch die Temperaturänderung um ein Vielfaches größer ist als die Signaländerung durch den Belagverschleiß. Eine solche Bedingung ist aber in der Regel gegeben.

Die Erfassung des Belagverschleißes ist dabei in der Auswerteeinheit auf definierte Zeitpunkte beschränkt, wenn z.B. das Fahrzeug eine definierte Zeitspanne stillstand und somit an den Bremsbelägen 18, 18' eine, vorzugsweise relativ konstante, Umgebungstemperatur vorherrscht, welche über in einem zugehörigen Fahrzeug implementierte Sensoren erfasst werden kann. Außerdem können dazu Betriebszustände des Fahrzeugs über weitere Sensoren und/oder beispielsweise Bremssteuergerät, Motorsteuergerät usw. von der Auswerteeinheit der Verschleißweg-Aufnehmer 1 zusätzlich benutzt werden.

Der Verschleißweg-Aufnehmer 1 kann nicht nur für die Erfassung eines Verschleißwegs von Bremsbelägen 18, 18' für Scheibenbremsen 16, insbesondere pneumatisch zugespannte Scheibenbremsen 16, im Nutzfahrzeugbereich verwendet werden, sondern auch bei allen anderen Anwendungen, bei welchen Verschleiß oder eine Wegänderung in Form von Materialabtrag stattfindet.

Die Erfindung ist nicht auf die oben beschriebenen Ausführungsbeispiele beschränkt. Sie ist im Rahmen der beigefügten Ansprüche modifizierbar.

Es können mehrere Verschleißvolumenelemente 3 in einem Verschleißweg-Aufnehmer 1 angeordnet sein.

So kann z.B. das Verschleißvolumenelement 3 aus unterschiedlichen Materialien bestehen, beispielsweise Fiberglas, fiberglasähnliche Werkstoffe.

Es ist denkbar, dass anstelle der Leiterelemente 6, 7 eine LED als Sendediode zur Einspeisung des Erregersignals dient, und ein Fototransistor zum Empfang des Antwortsignals angeordnet ist. Die LED und der Fototransistor sind in dieser alternativen Ausführung dann elektrisch mit der Auswerteeinheit verbunden.

Die Lichtimpulse des Erregersignals können im sichtbaren oder unsichtbaren Lichtbereich, z.B. Infrarot, liegen. Außerdem können die Lichtimpulse in Impulspaketen erzeugt werden.

### Bezugszeichenliste

- 1: Aufnehmer
- 2: Fühler
- 3: Verschleißvolumenelement
- 4, 4', 4": Vorderkante
- 5: Rand
- 6: Erstes Leiterelement
- 7: Zweites Leiterelement
- 8: Erster Verbindungsabschnitt
- 9: Zweiter Verbindungsabschnitt
- 10: Schutzumhüllung
- 11: Reibseite
- 12: Anschlussseite
- 13, 13', 13": Verschleißlänge
- 14: Verschleißdicke
- 15, 15', 15": Verschleißbreite
- 16: Scheibenbremse
- 17, 17': Belagträger
- 18, 18': Bremsbelag
- 19: Bremsscheibe
- 20, 20': Bremsbelagstärke

## Patentansprüche

1. Verschleißweg-Aufnehmer (1) zur Erfassung eines Verschleißwegs eines Bremsbelags (18, 18'), insbesondere einer Reibbremse, mit:
- einer Schutzumhüllung (10) mit einer Reibseite (11) und einer Anschlussseite (12); und
- einem Fühler (2) mit mindestens einem Verschleißvolumenelement (3),
wobei das Verschleißvolumenelement (3) lichtleitfähig ausgebildet ist, wobei ein Lichtleitweg des Volumens des Verschleißvolumenelementes (3) abhängig von dem Verschleißweg des Bremsbelags (18, 18') ist,
**dadurch gekennzeichnet, dass**
das Verschleißvolumenelement (3) einen ersten Verbindungsabschnitt (8) zur Einspeisung eines optischen Erregersignals und einen zweiten Verbindungsabschnitt (9) zur Auskopplung eines optischen Antwortsignals als optische Verbindungen aufweist,
wobei ein erstes Leiterelement (6) an dem ersten Verbindungsabschnitt (8) an der Anschlussseite (12) an einem linken Endabschnitt eines Rands (5) des lichtleitfähigen Verschleißvolumenelementes (3) angebracht ist, und wobei gegenüberliegend an einem rechten Endabschnitt dieses Rands (5) in gleicher Weise ein zweites Leiterelement (7) in dem zweiten Verbindungsabschnitt (9) mit dem lichtleitfähigen Verschleißvolumenelement (3) verbunden ist.

2. Verschleißweg-Aufnehmer (1) nach Anspruch 1, **dadurch gekennzeichnet, dass** sich das Verschleißvolumenelement (3) als ein dreidimensionaler Körper in Richtung des Verschleißwegs in einer Verschleißlänge (13), rechtwinklig dazu in einer Verschleißdicke (14) und einer Verschleißbreite (15) erstreckt.

3. Verschleißweg-Aufnehmer (1) nach Anspruch 1 oder 2, **dadurch gekennzeichnet, dass** das Verschleißvolumenelement (3) mittels der Verbindungsabschnitte (8, 9) über optische Leiterelemente (6, 7) mit einer Auswerteeinheit koppelbar ist.

4. Verschleißweg-Aufnehmer (1) nach mindestens einem der vorhergehenden Ansprüche, **dadurch gekennzeichnet, dass** das Verschleißvolumenelement (3) aus Fiberglas oder einem lichtleitfähigen Werkstoff mit ähnlichen Eigenschaften wie Fiberglas ausgebildet ist.

5. Verschleißweg-Aufnehmer (1) nach mindestens einem der vorhergehenden Ansprüche, **dadurch gekennzeichnet, dass** das Verschleißvolumenelement (3) folienähnlich als Rechteckfläche oder Konturfläche ausgebildet ist.

6. Verschleißweg-Aufnehmer (1) nach mindestens einem der Ansprüche 1 bis 4, **dadurch gekennzeichnet, dass** das Verschleißvolumenelement (3) zylinder-, quader-, prisma-, hohlzylinder-, kegel-, pyramidenförmig mit oder ohne Stumpf oder in einer beliebigen anderen sphärischen Form ausgebildet ist.

7. Verfahren zum Ermitteln eines Verschleißwegs eines Bremsbelags (18, 18'), insbesondere einer Reibbremse, mit einem Verschleißweg-Aufnehmer (1) nach mindestens einem der vorhergehenden Ansprüche, **dadurch gekennzeichnet, dass** dem Verschleißvolumenelement (3) des Verschleißweg-Aufnehmers (1) ein periodisches Erregersignal eingespeist wird, das Erregersignal nach Durchlauf durch das Verschleißvolumenelement (3) als Antwortsignal empfangen und eine Phasenverschiebung zwischen dem eingespeisten Erregersignal und dem empfangenen Antwortsignal als Verschleißweg des Bremsbelags (18, 18') ermittelt wird.

8. Verfahren nach Anspruch 7, **dadurch gekennzeichnet, dass** eine Amplitude und/oder Frequenz des Erregersignals und des Antwortsignals erfasst und verglichen wird.

9. Verfahren nach Anspruch 7 oder 8, **dadurch gekennzeichnet, dass** eine auf den Verschleißweg-Aufnehmer (1) einwirkende Temperaturänderung als Phasenverschiebung zwischen dem Erregersignal und dem Antwortsignal erfasst und einer Relativtemperatur zugeordnet wird.

10. Verfahren nach Anspruch 9, **dadurch gekennzeichnet, dass** die Temperaturänderung als Phasenverschiebung zwischen dem Erregersignal und dem Antwortsignal erfasst wird, wenn eine Geschwindigkeit der Änderung der Phasenverschiebung von Erregersignal und Antwortsignal durch die Temperaturänderung um ein Vielfaches größer ist als die Signaländerung durch den Belagverschleiß.

11. Verfahren nach mindestens einem der Ansprüche 7 bis 10, **dadurch gekennzeichnet, dass** das Ermitteln des Verschleißwegs in vorher festlegbaren Zeitpunkten bei einer konstanten Umgebungstemperatur erfolgt.

12. Verfahren nach mindestens einem der Ansprüche 7 bis 11, **dadurch gekennzeichnet, dass** beim Ermitteln des Verschleißwegs Betriebszustände eines zugeordneten Fahrzeugs über weitere Sensoren erfasst und in eine Auswertung einbezogen werden.

13. Bremsbelag (18, 18') mit einem Verschleißweg-Aufnehmer (1) nach mindesten einem der Ansprüche 1 bis 6.

## Claims

1. Wear distance sensor (1) for sensing a wear distance of a brake lining (18, 18'), in particular of a friction brake, having:
- a protective sheath (10) with a friction side (11) and a connecting side (12); and
- a pick-up (2) with at least one wear volume element (3),
wherein the wear volume element (3) is embodied so as to be light-transmitting, wherein a light-transmitting distance of the volume of the wear volume element (3) is dependent on the wear distance of the brake lining (18, 18'),
**characterized in that**
the wear volume element (3) has a first connecting section (8) for feeding in an optical exciter signal and a second connecting section (9) for extracting an optical response signal as optical connections,
wherein a first guide element (6) is attached to the first connecting section (8) on the connecting side (12) to a left-hand end section of an edge (5) of the wear volume element (3) which has a light-transmitting capability, and wherein a second guide element (7) is connected to the wear volume element (3) with a light-transmitting capability in the second connecting section (9) in the same way, positioned opposite on a right-hand end section of this edge (5).

2. Wear distance sensor (1) according to Claim 1, **characterized in that** the wear volume element (3) extends as a three-dimensional body in the direction of the wear distance in a wear length (13) and, at right angles thereto, in a wear thickness (14) and a wear width (15).

3. Wear distance sensor (1) according to Claim 1 or 2, **characterized in that** the wear volume element (3) can be coupled to an evaluation unit by means of the connecting sections (8, 9) via optical guide elements (6, 7) .

4. Wear distance sensor (1) according to at least one of the preceding claims, **characterized in that** the wear volume element (3) is embodied from fibre glass or a light-transmitting material with similar properties to that of fibre glass.

5. Wear distance sensor (1) according to at least one of the preceding claims, **characterized in that** the wear volume element (3) is embodied in a manner similar to a film as a rectangular surface or contoured surface.

6. Wear distance sensor (1) according to at least one of Claims 1 to 4, **characterized in that** the wear volume element (3) is embodied in the form of a cylinder, right parallelepiped, prism, hollow cylinder, cone or pyramid with or without a blunt end or of any other desired spherical shape.

7. Method for determining a wear distance of a brake lining (18, 18'), in particular of a friction brake, having a wear distance sensor (1), according to at least one of the preceding claims, **characterized in that** a periodic exciter signal is fed into the wear volume element (3) of the wear distance sensor (1), the exciter signal is received as a response signal after it passes through the wear volume element (3), and a phase shift between the fed-in exciter signal and the received response signal is determined as a wear distance of the brake lining (18, 18').

8. Method according to Claim 7, **characterized in that** an amplitude and/or frequency of the exciter signal and of the response signal are/is detected and compared.

9. Method according to Claim 7 or 8, **characterized in that** a change in temperature which acts on the wear distance sensor (1) is detected as a phase shift between the exciter signal and the response signal and is assigned to a relative temperature.

10. Method according to Claim 9, **characterized in that** the change in temperature is detected as a phase shift between the exciter signal and the response signal if a speed of the change of the phase shift of the exciter signal and response signal as a result of the change in temperature is many times greater than the change in the signal as a result of the lining wear.

11. Method according to at least one of Claims 7 to 10, **characterized in that** the wear distance is determined at predefinable times at a constant ambient temperature.

12. Method according to at least one of Claims 7 to 11, **characterized in that**, during the determination of the wear distance, operating states of an assigned vehicle are detected by means of further sensors and included in an evaluation.

13. Brake lining (18, 18') having a wear distance sensor (1) according to at least one of Claims 1 to 6.

## Revendications

1. Capteur (1) de course d'usure pour détecter une course d'usure d'une garniture (18, 18') de frein, notamment d'un frein à friction, comprenant :
- une enveloppe (10) ayant un côté (11) de friction et un côté (12) de connexion et
- une sonde (2) ayant au moins un élément (3) d'usure en volume, l'élément (3) d'usure en volume étant apte à conduire de la lumière, dans lequel un chemin de conduite de la lumière du volume de l'élément (3) d'usure en volume dépend de la course d'usure de la garniture (18, 18') de frein,
**caractérisé en ce que**
l'élément (3) d'usure en volume a, comme liaison optique, une première partie (8) de liaison, pour injecter un signal optique d'excitation, et une deuxième partie (9) de liaison, pour sortir un signal optique de réponse,
dans lequel un premier élément (6) de guidage de la première partie (8) de liaison du côté (12) de connexion est mis sur une partie d'extrémité gauche d'un bord (5) de l'élément (3) d'usure en volume apte à conduire la lumière et dans lequel, en opposition à une partie d'extrémité droite de ce bord (5), de la même façon, un deuxième élément (7) de guidage de la deuxième partie (9) de liaison est relié à l'élément (3) d'usure en volume apte à conduire de la lumière.

2. Capteur (1) de course d'usure suivant la revendication 1, **caractérisé en ce que** l'élément (3) d'usure en volume s'étend, sous la forme d'une pièce en trois dimensions, dans la direction de la course d'usure suivant une longueur (3) d'usure, perpendiculairement à celle-ci suivant une épaisseur (14) d'usure et une largeur (15) d'usure.

3. Capteur (1) de course d'usure suivant la revendication 1 ou 2, **caractérisé en ce que** l'élément (3) d'usure en volume peut, au moyen des parties (8, 9) de liaison, être couplé à une unité d'exploitation par des éléments (6, 7) de guidage optique.

4. Capteur (1) de course d'usure suivant au moins l'une des revendications précédentes, **caractérisé en ce que** l'élément (3) d'usure en volume est en fibre de verre ou en un matériau apte à guider la lumière, ayant des propriétés analogues à de la fibre de verre.

5. Capteur (1) de course d'usure suivant au moins l'une des revendications précédentes, **caractérisé en ce que** l'élément (3) d'usure en volume est constitué d'une manière analogue à une feuille, sous la forme d'une surface rectangulaire ou d'une surface à contour.

6. Capteur (1) de course d'usure suivant au moins l'une des revendications 1 à 4, **caractérisé en ce que** l'élément (3) d'usure en volume est cylindrique, parallélépipédique, prismatique, en forme de cylindre creux, de cône ou de pyramide, avec ou sans tronc, ou en une autre forme sphérique quelconque.

7. Procédé de détermination d'une course d'usure d'une garniture (18, 18') de frein, notamment d'un frein à friction, comprenant un capteur (1) de course d'usure suivant au moins l'une des revendications précédentes, **caractérisé en ce que** l'on injecte un signal périodique d'excitation dans l'élément (3) d'usure en volume du capteur (1) de course d'usure, on reçoit le signal d'excitation après qu'il a passé dans l'élément (3) d'usure en volume, sous la forme d'un signal de réponse, et on détermine, comme course d'usure de la garniture (18, 18') de frein, un déphasage entre le signal d'excitation injecté et le signal de réponse reçu.

8. Procédé suivant la revendication 7, **caractérisé en ce que** l'on détecte une amplitude et/ou une fréquence du signal d'excitation et du signal de réponse et on les compare.

9. Procédé suivant la revendication 7 ou 8, **caractérisé en ce que** l'on détecte une variation de température influençant le capteur (1) de course d'usure, sous la forme d'un déphasage entre le signal d'excitation et le signal de réponse, et on lui associe une température relative.

10. Procédé suivant la revendication 9, **caractérisé en ce que** l'on détecte la variation de température, sous la forme d'un déphasage entre le signal d'excitation et le signal de réponse, si une vitesse de la variation du déphasage, entre le signal d'excitation et le signal de réponse, sous l'effet de la variation de la température, est plus grande d'un multiple que la variation du signal par l'usure de la garniture.

11. Procédé suivant au moins l'une des revendications 7 à 10, **caractérisé en ce que** l'on effectue la détermination de la course d'usure, à des instants pouvant être fixés à l'avance, à une température ambiante constante.

12. Procédé suivant au moins l'une des revendications 7 à 11, **caractérisé en ce que**, lorsque l'on détermine la course d'usure, on détecte, par d'autres capteurs, des états de fonctionnement d'un véhicule associé et on les incorpore dans une exploitation.

13. Garniture (18, 18') de frein ayant un capteur (1) de course d'usure suivant au moins l'une des revendications 1 à 6.
